(19) **Europäisches Patentamt / European Patent Office / Office européen des brevets**

(11) **EP 3 596 967 B1**

(12) **EUROPEAN PATENT SPECIFICATION**

(45) Date of publication and mention of the grant of the patent:
**27.01.2021 Bulletin 2021/04**

(51) Int Cl.:
**H04W 28/20** *(2009.01)*  **H04W 84/20** *(2009.01)*
**H04L 12/807** *(2013.01)*

(21) Application number: **18713815.1**

(86) International application number:
**PCT/EP2018/056384**

(22) Date of filing: **14.03.2018**

(87) International publication number:
**WO 2018/167144 (20.09.2018 Gazette 2018/38)**

(54) **MASTER NODE FOR USE IN A NETWORK INCLUDING A BLUETOOTH LE LINK AND NETWORK COMPRISING SAME**

MASTER-KNOTEN MIT DIENSTGÜTE UNTERSTÜTZUNG ZUR VERWENDUNG IN EINEM NETZWERK MIT EINER BLUETOOTH-LOW ENERGY VERBINDUNG UND NETZWERK DAMIT

NOEUD MAÎTRE AYANT SUPPORT DE QUALITÉ DE SERVICE DESTINÉ À ÊTRE UTILISÉ DANS UN RÉSEAU INCLUANT UNE LIAISON BLUETOOTH LOW ENERGY ET RÉSEAU LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2017 EP 17161723**

(43) Date of publication of application:
**22.01.2020 Bulletin 2020/04**

(73) Proprietor: **Televic Healthcare NV**
**8870 Izegem (BE)**

(72) Inventors:
 • **MALIK, Salman**
   **9000 Gent (BE)**
 • **CROMBEZ, Pieter**
   **8820 Torhout (BE)**

(74) Representative: **Beck, Michaël Andries T.**
**IPLodge bvba**
**Technologielaan 9**
**3001 Heverlee (BE)**

(56) References cited:
**WO-A1-2016/159844      US-A1- 2005 261 007**
**US-A1- 2013 034 005**

• **Anonmyous: "Bluetooth Core Specification v5.0", Bluetooth SIG , 6 December 2016 (2016-12-06), pages 1778-1826, XP002773707, Retrieved from the Internet: URL:https://www.bluetooth.org/DocMan/handlers/DownloadDoc.ashx?doc_id=421043&_ga=2.158220531.838068264.1505226351-2017930581.1505226351 [retrieved on 2017-09-12]**

**Description**

**Field of the Invention**

The present invention pertains to the field of wireless communication, and in particular to issues of traffic differentiation in Bluetooth LE links as used by simple low-energy transmitters such as wireless sensors.

**Background**

US patent application publication no. 2013/0034005 A1, entitled "Enhanced QoS Support Using Bluetooth Low Energy", in the name of Texas Instruments Inc., discloses some embodiments supporting stringent Quality of Service (QoS) requirements using adaptations to the existing Bluetooth Low Energy (BLE) protocols. In systems using an enhanced BLE protocol, the master sends a poll frame at selected connection intervals or poll intervals. The duration of the connection interval and/or poll interval may be calculated based upon desired QoS parameters, such as delay, target packet error rate (PER), frame error rate (FER), and/or jitter. The master may consider the connection interval lost if a frame is not received from the slave after a predetermined number (m) of consecutive poll frames are transmitted. The value m may be set relatively high to provide more robustness in the system. However, the poll interval may also need to be adjusted to meet QoS requirements. The slave may be required to transmit a packet - that may or may not carry data - in response to every mth received poll. The cited patent application publication does not optimize the utilization of the medium under conflicting bandwidth demands.

The Bluetooth Core Specification v5.0, Vol. 3, Part A, of the Bluetooth SIG (6 December 2016), describes in section 5 "Configuration Parameter Options" (pages 1778-1798) the parameter options available to configure links. The "Retransmission and Flow Control" option (section 5.4) specifies whether retransmission and flow control is used. The mode parameter controls both incoming and outgoing data flow, and is negotiable. The other parameters, including *TxWindow size* (used in Flow Control mode, Retransmission mode, and Enhanced Retransmission Mode) and *Max Transmit* (used in Retransmission Mode and Enhanced Retransmission Mode), control incoming data flow and are non-negotiable. The specification indicates that the *TxWindow size* parameter should be made as large as possible to maximize channel utilization. It is a disadvantage of this specification that it does not provide any parameters that could be used to allow a master node to optimize channel utilization in the presence of concurrent bandwidth reservation requests.

Finally, Publication US 2005/0261007 A1 discloses mechanisms for end-to-end QoS provisioning over multiple Bluetooth links, in conjunction with IP-based resource reservation protocols.

**Summary**

According to an aspect of the present invention, there is provided a master node adapted to:

- establish a Bluetooth LE link with a device;
- receive, via the Bluetooth LE link, bandwidth reservation request messages including a minimum desired transmission window length and a maximum desired transmission window length; and
- schedule transmission windows for respective transmitters, in particular a transmission window for the link with the device, in accordance with the minimum desired transmission window length and the maximum desired transmission window length advertised in the respective bandwidth reservation request messages, wherein the scheduling is adapted to minimize overlapping of the transmission windows according to assigned values.

It is an advantage of the present invention that it allows mixed networks, including one or more Bluetooth LE links, to be used for applications that are QoS-sensitive. The invention is based *inter alia* on the insight of the inventor that by allowing nodes to advertise both desired minimum and maximum window lengths, scheduling on the Bluetooth LE link can be performed in such a way as to maximize the compliance with the end nodes' bandwidth requests while optimizing the utilization of the medium, by performing the scheduling so as to minimize overlap between assigned values of said transmission windows.

In an embodiment of the master node according to the present invention, the scheduling comprises dropping a transmitter if it is not possible to assign a transmission window of the corresponding minimum desired transmission window length without overlapping an already scheduled minimum transmission window for a different transmitter.

It is an advantage of this embodiment that the master node ensures that requested minimum window lengths are strictly respected, in a non-overlapping way, by refusing to schedule additional transmitters (or dropping scheduled transmitters) if the minimum requirements of the latter are not compatible with other window allocations.

In a particular embodiment, the master node is further adapted to apply said dropping to a transmitter selected on the basis of a priority parameter comprised in the bandwidth reservation request messages.

It is an advantage of this embodiment that requested links are not dropped indiscriminately on a first-come-first-served basis, but on the basis of the importance of the service concerned, as expressed by a priority parameter comprised in the bandwidth reservation request messages. In this way, adequate allocation of bandwidth for mission-critical services can be ensured, while remaining available bandwidth can be used up by less critical services.

In an embodiment, the master node according to the present invention is further adapted to prioritize transmitters having overlapping transmission windows on the basis of a QoS parameter comprised in the bandwidth reservation request messages or in data packets to be transmitted.

It is an advantage of this embodiment that data packets for transmission are not dropped indiscriminately, but on the basis of the importance of the service concerned, as expressed by a QoS parameter comprised in the bandwidth reservation request messages or in the data packets to be transmitted. In this way, proper operation of mission-critical services can be ensured, while remaining available bandwidth can be used up by less critical services.

In a particular embodiment, the master node is further adapted to periodically force a scheduling of a transmission for a transmitter having the lowest priority among a set of transmitters having overlapping transmission windows.

It is an advantage of this embodiment that it avoids starvation of particular QoS levels, which may lead to an undesired loss of connection in protocols that rely on regular exchanges of data or control packets.

In an embodiment, the master node according to the present invention is further adapted to act as a gateway node for bridging data between at least one wireless LAN link and the Bluetooth LE link, the gateway node being configured to:

- detect a first priority value comprised in a first data packet as received on the Bluetooth LE link;
- translate the first priority value to a second priority value in accordance with a first translation table; and
- transmit the data packet on the at least one wireless LAN link in accordance with and containing the second priority value.

It is an advantage of this embodiment that it allows for QoS-aware bridging between a Bluetooth LE link and a wireless LAN link, whereby the required QoS level of a service operating over the Bluetooth LE link is respected when relevant traffic is bridged to the wireless LAN link. For this purpose, it is necessary to translate priority values as used on the Bluetooth LE link to priority values that can be used on wireless LAN links (such as the standardized priority bits of IEEE Std 802.1p as used in WLANs in accordance with IEEE Std 802.11).

In an embodiment, the first priority value is comprised in said packet as a specific value of an access address field, as a specific value of an LLID field, or as a specific value of a predetermined part of a payload field.

It is an advantage of this embodiment that the priority values can be detected by the master node in a simple and reliable manner, which can be implemented without losing backward compatibility with existing Bluetooth LE infrastructure.

In an embodiment, the master node according to the invention is further adapted to act as a gateway node for bridging data between said Bluetooth LE link and at least one wireless LAN link, said gateway node being configured to:

- detect a third priority value comprised in a second data packet as received on said wireless LAN link;
- translate said third priority value to a fourth priority value in accordance with a second translation table; and
- transmit said second data packet on said Bluetooth LE link in accordance with and containing said fourth priority value.

It is an advantage of this embodiment that it allows for QoS-aware bridging between a wireless LAN link and a Bluetooth LE link, whereby the required QoS level of a service operating over the wireless LAN link is respected when relevant traffic is bridged to the Bluetooth LE link. For this purpose, it is necessary to translate priority values as used on wireless LAN links (such as the standardized priority bits of IEEE Std 802.1p as used in WLANs in accordance with IEEE Std 802.11) to priority values that can be used on the Bluetooth LE link. The "second" translation table used for this purpose may correspond to the "first" translation table, introduced above, used in the reverse direction.

In a specific embodiment, the fourth priority value is included in said second data packet as a specific value of a predetermined part of a payload field.

According to an aspect of the present invention, there is provided a network comprising a master node as described above, at least one Bluetooth LE transmitter, and at least one wireless LAN transceiver, said master node being arranged to act as a gateway node between said at least one Bluetooth LE transmitter and said at least one wireless LAN transceiver.

According to an aspect of the present invention, there is provided an electronic device comprising a Bluetooth LE transmitter for use in the network as described above, said Bluetooth LE transmitter being adapted to transmit bandwidth reservation request messages comprising said minimum desired transmission window length and said maximum desired transmission window length.

The technical effects and advantages of embodiments of the network and of the electronic device according to the present invention correspond, *mutatis mutandis,* to those of the corresponding embodiments of the master node according to the present invention.

**Brief Description of the Figures**

These and other technical features and advantages of embodiments of the present invention will now be described with reference to the accompanying figures, in which:

- Figure 1 illustrates an embodiment of the network according to the present invention;

- Figure 2 schematically illustrates the concept of resetting the supervisionTimeout parameter, as used in embodiments of the master node according to the present invention, and

- Figure 3 schematically illustrates ways to include prioritization information in Bluetooth LE packets.

**Detailed Description of Embodiments**

The end-to-end connectivity between wearables, environment sensors and other devices within a critical network infrastructure can be made of multiple interconnected networks. This means that data and commands to or from these devices may travel over networks with different topologies, e.g., star and mesh topologies, and using different technologies, e.g., wired LANs (for example according to IEEE Std 802.3, also known as Ethernet), wireless LANs (for example according to IEEE Std 802.11, also known as Wi-Fi), wireless PANs (for example according to the Bluetooth Low Energy standard), etc. with differences in latency, reliability and available bandwidth.

In many application contexts, certain types of traffic are mission critical and have strict latency requirements. For example, in a healthcare setting, messages such as alerts and voice transmissions over nurse call systems have strict latency requirements and shall be treated with higher priority compared to other traffic like reports and device statuses. Similarly, other use-cases like streaming sensor measurements require a dedicated bandwidth that shall be protected from other applications especially over low-bandwidth technologies like Bluetooth Low Energy. A scheme to divide healthcare traffic into different classes and enabling differentiated service over these networks and technologies to meet the specified QoS requirements can allow to manage the overall network more efficiently.

While embodiments of the present invention will be described hereinafter primarily with reference to their use in a healthcare infrastructure, the invention is not limited thereto, and can be advantageously deployed in any QoS-sensitive or mission critical application context.

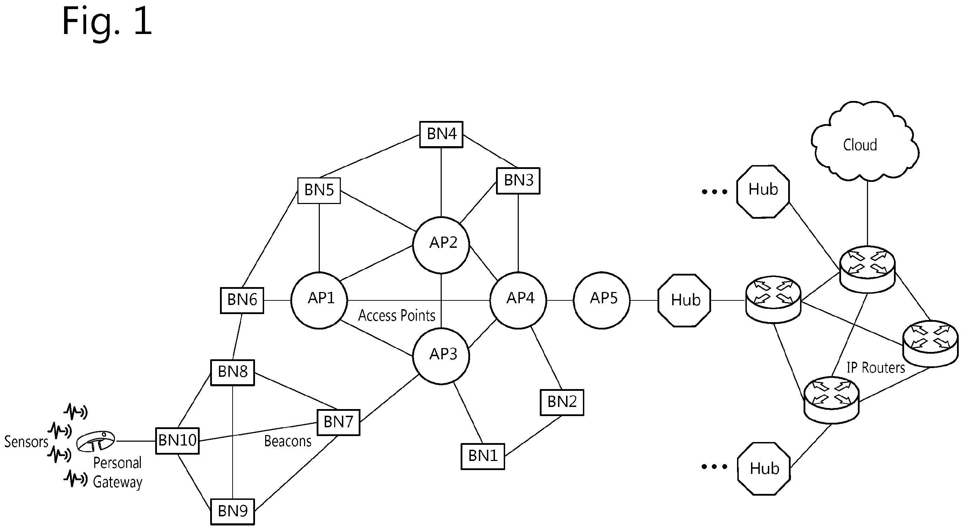

Figure 1 shows the end-to-end architecture of a network for healthcare and patient monitoring. In this figure Beacons (BN) are equipped with Bluetooth Low Energy and Access Points (AP) are equipped with Bluetooth Low Energy and Wi-Fi radios. The data and commands traffic is routed over the heterogeneous network.

In the existing link layer protocol for Bluetooth LE, there is no mechanism to enable lower priority traffic to relinquish to higher priority traffic. Embodiments of the present invention are based on the insight of the inventor that in order to add such a mechanism, provisions must be made to avoid the undesirable side-effect that in case of long streams of higher priority traffic (e.g., voice communication), devices forwarding lower priority traffic would lose connection.

According to the invention, there is provided a master node for use in a network including a Bluetooth LE link, the master node being adapted to:

- receive, via the Bluetooth LE link, bandwidth reservation request messages including a minimum desired transmission window length and a maximum desired transmission window length; and

- schedule transmission windows for respective transmitters on the Bluetooth LE link in accordance with the minimum desired transmission window length and the maximum desired transmission window length advertised in the respective bandwidth reservation request messages, the scheduling being performed so as to minimize overlap between assigned values of the transmission windows.

Accordingly, central devices or "master nodes" schedule Connection Events (CEs) to exchange data and commands with peripheral devices like sensors, etc. connected with it. These CEs are scheduled at regular intervals which are called Connection Intervals (CIs). The duration of Connection Events, scheduled by the master nodes, is bounded by Min CE and Max CE where Max CE $\geq$ Min CE. As the master nodes may have to schedule many connections simultaneously, the CEs are usually tightly scheduled which is not an issue under normal operation. However, some connections may require higher bandwidth for some duration, e.g., voice communication over Bluetooth LE, resulting in CEs that overlap with CEs of lower priority connections.

While transmitters must be adapted to transmit bandwidth reservation request messages, including in particular a minimum desired transmission window length and a maximum desired transmission window length, the actual provisioning of bandwidth and the enforcement of the Quality-of-Service policy is performed at a master node that schedules the transmission windows on the Bluetooth LE link of the network. Within overlapping portions of the assigned transmission windows, prioritization of certain service types over others may be used to avoid collisions and the resulting packet drops. By taking into account both a minimum desired transmission window length which is preferably contention-free and thus non-overlapping (corresponding for example to the minimum bandwidth required for an application to function properly), and a maximum desired transmission window length which may be overlapping, the master node can apportion the available transmission time in a more optimal way.

Of course, there is no *a priori* guarantee that all the minimum requests of the transmitters on the Bluetooth LE link can be accommodated by the master node in the available airtime. Hence, there may be situations where some transmitters cannot be allocated their minimum required transmission windows, in which case the master node will not schedule transmission windows for these transmitters; hereinafter it will be said that these transmitters are "dropped" or "relinquished" by the master node.

The scheduling performed by the master node may comprise dropping a transmitter if it is not possible to assign a transmission window of the corresponding minimum desired transmission window length without overlapping an already scheduled minimum transmission window for a different transmitter. The dropping may be applied to a transmitter selected on the basis of a priority parameter comprised in the bandwidth reservation request messages, as will be described in more detail below.

The master node may be adapted to prioritize transmitters having overlapping transmission windows on the basis of a QoS parameter comprised in the bandwidth reservation request messages or in data packets to be transmitted. In this case, the master node may be further adapted to periodically force a scheduling of a transmission for a transmitter having the lowest priority among a set of transmitters having overlapping transmission windows. This mechanism can for example be used such that even low-priority transmitters are assigned a sufficient amount of transmission opportunities to send the messages that may be required in the relevant link layer protocol or application protocol in order not to lose a "connected" state with a peer.

A particularly advantageous manner of dealing with lower-priority transmissions will now be described. According to the Bluetooth specifications, a connection is lost if there is no valid communication between the master node and the peripheral device within *supervisionTimeout.* This means that from the last valid communication, the master node shall start a timer with timeout interval equal to *supervisionTimeout* and shall schedule at least one Connection Interval among the possible $\left\lfloor \frac{supervisionTimeout}{Connection\ Interval\ .(connSlaveLatency+1)} \right\rfloor$ intervals when it is possible to have valid communication (note that if *slavelatency* $\geq$ 1, a Peripheral Device skips this number of Connection Intervals before it can respond). The master node may use a density function to randomly decide in which of these events, when the peripheral device can respond, it shall schedule the Connection Interval of the lower priority connection. The density function of scheduling the Connection Interval x, given intervals from 1... x are not scheduled or communication was invalid, is:

$$f(x) = \frac{x}{N}$$

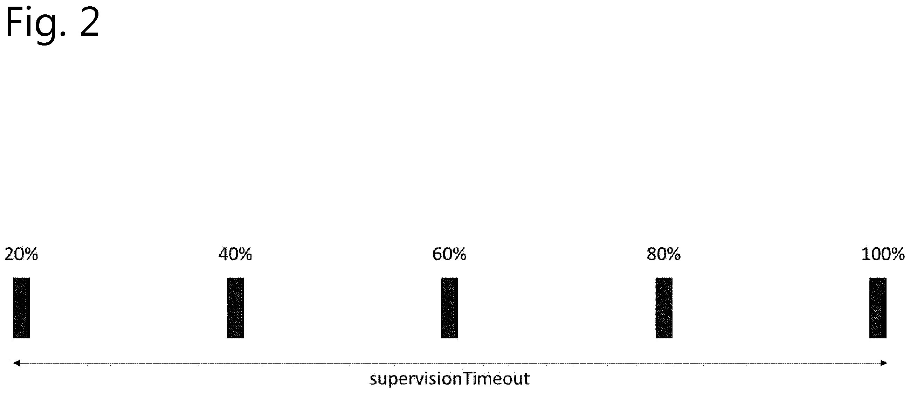

Where *x* = 1,...,*N* and $N = \left\lfloor \frac{supervisionTimeout}{Connection\ Interval\ .(connSlaveLatency+1)} \right\rfloor$ Once a valid communication takes place, the timer with duration *supervisionTimeout* is reset. This concept is also shown in Figure 2.

In the Bluetooth LE specs, after the connection is established, a proprietary mechanism is defined by embodiments of the present invention to allow the peripheral device to transport its desired Min CE and Max CE intervals to the master node. This may be achieved by defining proprietary LL_Control PDUs. The master node uses the information contained in these proprietary messages from all their peripheral devices in an algorithm that can be implemented using Constraint Programming. This is to derive a schedule of CIs that minimizes the overlap of the windows of concurrently scheduled Connection Events.

In the Bluetooth LE specs, packets are transmitted again and again till they are transmitted successfully. This is not useful in the case of real-time applications like voice communication. In embodiments of the present invention, a dynamic number of retries is introduced to take into account the reliability requirements of the application in question.

Embodiments of the present invention are further based on the insight of the inventor that in a critical setting, such as healthcare, a seamless QoS experience between parts of a network based on different technologies, including Bluetooth LE, requires a mapping of traffic classes. However, Bluetooth LE does not natively provide a way of signaling traffic classes. Embodiments of the present invention define Bluetooth LE Access Categories and map the User Priority levels used in WLAN networks (such as IEEE 802.1p priority bits) to these Access categories and vice versa. Embodiments of the present invention further provide an extension-header in Bluetooth LE Data Packets to carry these Access categories.

Using the Continua Design Guidelines of the Personal Connected Health Alliance (available at http://www.pchalliance.org/continua-design-guidelines), the followings exemplary classes of traffic may be defined in a healthcare network:

| Traffic Class | Description |
| --- | --- |
| Network Management | Packets for routing and management of the healthcare network |
| Voice | Voice on nurse call systems |
| Samples | Sampled analogue data that can easily be grouped together, e.g., waveform samples at regular intervals |
| Measurement | Sensor measurements, e.g., blood pressure, Sp02, heart rate, etc. |
| Control | Get/set device parameters, exchange control and status of both physiological information and equipment functionality |
| Alarm | External enunciation of physiological conditions, equipment conditions, or other conditions that need attention |
| Alert | Notify somebody of a condition, e.g., an event or an occurrence of a condition. Alert is distributed within the system to Actuator devices either in a home or remote monitoring environments |
| Notification | Information sent to one or more components in the environment via regular packets in a data stream or via non-deterministic mode, e.g., publishing events and measurements to subscribers |
| Command/Response | Action or information explicitly requested by another component including the ability to get information, set configuration and execute action |
| Bulk | Print, transfer or exchange of summaries, reports and histories |

For QoS and traffic differentiation at the network layer, the IP Differentiated Services (DiffServ) architecture defined in RFC 2474 and RFC 2475 may be used, which define the Differentiated Services Code Point (DSCP) field in IP header. DiffServ allows the traffic to be treated by intermediate systems, e.g. IP routers, with relative priorities based on the type of service. In embodiments of the present invention, the IP DSCP levels may be linked with the Traffic Classes provided on the Bluetooth LE link, so as to reuse the IP level differentiated architecture that is already in place and implemented by IP routers.

For QoS and traffic differentiation at the logical link control layer, in particular the Wi-Fi MAC and the Bluetooth Low Energy Link Layer, the issue is how to pass the prioritization parameters across different PHYs. According to embodiments of the present invention, the IEEE Std 802.1D User Priority levels are linked to Access Categories that define the prioritization at layer 2.

Accordingly, the master node according to the present invention may be adapted to act as a gateway node for bridging data between at least one wireless LAN link and the Bluetooth LE link, the gateway node being configured to:

- detect a first priority value comprised in a first data packet as received on the Bluetooth LE link;
- translate the first priority value to a second priority value in accordance with a first translation table; and
- transmit the first data packet on the at least one wireless LAN link in accordance with and containing the second priority value.

A translation table for the Quality-of-Service levels for various network technologies, including the Bluetooth LE Access Classes provided by the present invention, is shown below. The "first translation table" of a master node according to an embodiment of the invention may consist of the relevant rows and columns of the illustrated table.

| Traffic Classes | IP Level DSCP | 802.1D User Priority | Wi-Fi ACs | Bluetooth LE ACs | Reliability |
|---|---|---|---|---|---|
| Network Management | CS6/CS7 | 7 | AC_VOICE | AC_CONTROL | > 99,9% |
| Voice | CS5 | 6 | AC_VOICE | AC_TIME_CRITICA L | > 90,0% |
| Samples | AF43 | 5 | AC_VIDEO | AC_STREAM | > 90,0% |
| Alert | AF31 | 4 | AC_VIDEO | AC_INTERACT | > 99,9% |
| Control | AF31 | 4 | AC_VIDEO | AC_INTERACT | > 99,9% |
| Command/ Response | AF31 | 4 | AC_VIDEO | AC_INTERACT | > 99,9% |
| Notification | AF21 | 3 | AC_BEST_EFFOR T | AC_BEST_EFFORT | > 99,9% |
| Measurement | AF22 | 3 | AC_BEST_EFFOR T | AC_BEST_EFFORT | > 95,0% |
| Alarm | AF21 | 0 | AC_BEST_EFFOR T | AC_BEST_EFFORT | > 99,9% |
| Bulk | AF11 | 1 | AC_BACKGROUND | AC_BACKGROUND | > 99,9% |

The master node may be further adapted to act as a gateway node for bridging data between the Bluetooth LE link and at least one wireless LAN link, the gateway node being configured to:

- detect a third priority value comprised in a second data packet as received on the wireless LAN link;
- translate the third priority value to a fourth priority value in accordance with a second translation table; and
- transmit the second data packet on the Bluetooth LE link in accordance with and containing the fourth priority value.

The second translation table may correspond, *mutatis mutandis,* to the first translation table.

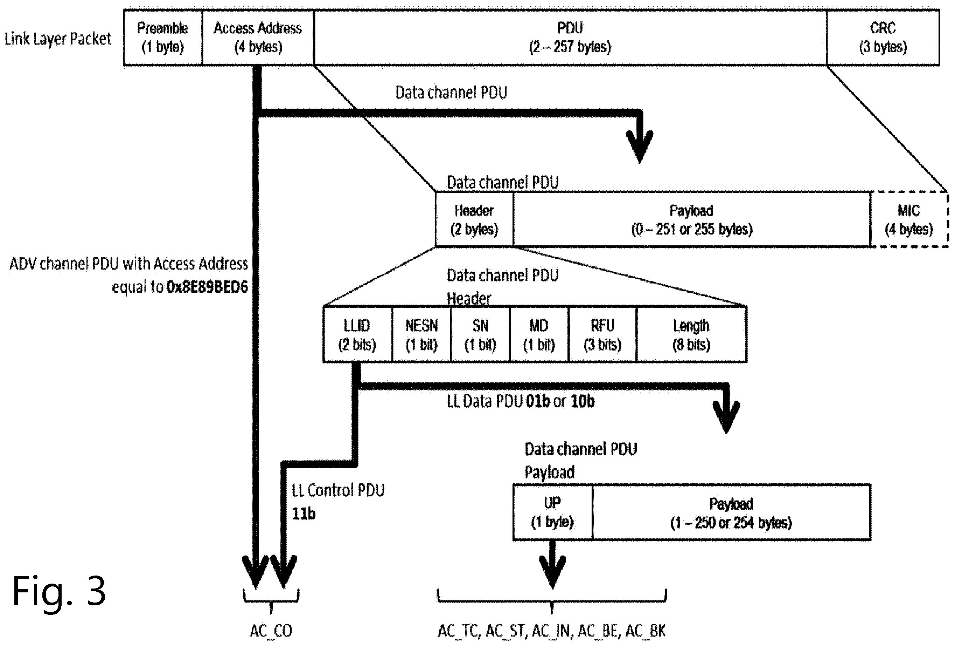

Figure 3 illustrates the proprietary changes we need to enable the transportation of User Priority and Access Categories, i.e. the "first priority value" and the "fourth priority value" mentioned above, over Bluetooth LE. The priority value may be included in a data packet on the Bluetooth LE link as a specific value of an access address field, as a specific value of an LLID field, or as a specific value of a predetermined part of a payload field.

The access address field and the LLID field can be used to designate a packet as "network management" traffic, which is treated with the highest priority. Data packets are transmitted with a different LLID, which is specified by the Bluetooth LE specification. In order to provide QoS differentiation in such data packets, a further QoS field may be introduced in the part of the packet that is considered as the payload by existing Bluetooth LE infrastructure, and the master node may be configured to read the value of this field when receiving packets from nodes that are capable of including them. The presence of this additional field may be signaled in the packet header by the use of a dedicated LLID value.

The functions described hereinabove as pertaining to the master node may be implemented in dedicated hardware (e.g., ASIC), configurable hardware (e.g., FPGA), programmable components (e.g., a DSP or general purpose processor with appropriate software), or any combination thereof. The same component may also include other functions. The present invention also pertains to a computer program, optionally stored on a computer-readable medium, comprising code means adapted to cause a processor in a system with appropriate network interfaces to perform the functions of the master node as described above.

The invention also pertains to a network comprising a master node as described above, at least one Bluetooth LE transmitter, and at least one wireless LAN transceiver, the master node being arranged to act as a gateway node between the at least one Bluetooth LE transmitter and the at least one wireless LAN transceiver.

The invention also pertains to an electronic device comprising a Bluetooth LE transmitter for use in the network, the Bluetooth LE transmitter being adapted to transmit bandwidth reservation request messages comprising the minimum desired transmission window length and the maximum desired transmission window length.

While the invention has been described hereinabove with reference to specific embodiments, this was done to illustrate and not to limit the invention, the scope of which is to be determined by reference to the attached claims.

**Claims**

1. A master node being adapted to:

   - establish a Bluetooth LE link with a device;
   - receive, via said Bluetooth LE link, bandwidth reservation request messages including a minimum desired transmission window length and a maximum desired transmission window length; and
   - schedule transmission windows for respective transmitters, in particular a transmission window for the link with the device, in accordance with said minimum desired transmission window length and said maximum desired transmission window length advertised in said respective bandwidth reservation request messages, wherein the scheduling is adapted to minimize overlapping of said transmission windows according to assigned values.

2. The master node according to claim 1, wherein said scheduling comprises dropping a transmitter if it is not possible to assign a transmission window of the corresponding minimum desired transmission window length without overlapping an already scheduled minimum transmission window for a different transmitter.

3. The master node according to claim 2, further adapted to apply said dropping to a transmitter selected on the basis of a priority parameter comprised in the bandwidth reservation request messages.

4. The master node according to any of the preceding claims, further adapted to prioritize transmitters having overlapping transmission windows on the basis of a QoS parameter comprised in said bandwidth reservation request messages or in data packets to be transmitted.

5. The master node according to claim 4, further adapted to periodically force a scheduling of a transmission for a transmitter having the lowest priority among a set of transmitters having overlapping transmission windows.

6. The master node according to any of the preceding claims, further adapted to act as a gateway node for bridging data between at least one wireless LAN link and said Bluetooth LE link, said gateway node being configured to:

   - detect a first priority value comprised in a first data packet as received on said Bluetooth LE link;
   - translate said first priority value to a second priority value in accordance with a first translation table; and
   - transmit said first data packet on said at least one wireless LAN link in accordance with and containing said second priority value.

7. The master node in accordance with claim 6, wherein said first priority value is comprised in said packet as a specific value of an access address field, as a specific value of an LLID field, or as a specific value of a predetermined part of a payload field.

8. The master node according to any of the preceding claims, further adapted to act as a gateway node for bridging data between said Bluetooth LE link and at least one wireless LAN link, said gateway node being configured to:

   - detect a third priority value comprised in a second data packet as received on said wireless LAN link;
   - translate said third priority value to a fourth priority value in accordance with a second translation table; and
   - transmit said second data packet on said Bluetooth LE link in accordance with and containing said fourth priority value.

9. The master node in accordance with claim 8, wherein said fourth priority value is included in said second data packet as a specific value of a predetermined part of a payload field.

10. A network comprising a master node according to any of claims 6-9, at least one Bluetooth LE transmitter, and at least one wireless LAN transceiver, said master node being arranged to act as a gateway node between said at least one Bluetooth LE transmitter and said at least one wireless LAN transceiver.

11. A Bluetooth LE transmitter adapted to transmit a bandwidth reservation request message including a minimum desired transmission window length and a maximum desired transmission window length, and to receive a scheduling transmission window in accordance with said requested minimum desired transmission window length and said maximum desired transmission window length.

**EP 3 596 967 B1**

**Patentansprüche**

1. Masterknoten, der zu Folgendem angepasst ist:

   - Aufbauen einer Bluetooth-LE-Verbindung mit einer Vorrichtung;
   - Empfangen von Bandbreitenreservierungsanforderungsnachrichten, die eine minimale gewünschte Übertragungsfensterlänge und eine maximale gewünschte Übertragungsfensterlänge beinhalten, via die Bluetooth-LE-Verbindung; und
   - Planen von Übertragungsfenstern für jeweilige Sender, insbesondere ein Übertragungsfenster für die Verbindung mit der Vorrichtung, gemäß der minimalen gewünschten Übertragungsfensterlänge und der maximalen gewünschten Übertragungsfensterlänge, die in den jeweiligen Bandbreitenreservierungsanforderungsnachrichten angegeben sind, wobei das Planen angepasst ist, eine Überlappung der Übertragungsfenster gemäß den zugewiesenen Werten zu minimieren.

2. Masterknoten nach Anspruch 1, wobei das Planen das Trennen eines Senders umfasst, wenn es nicht möglich ist, ein Übertragungsfenster der entsprechenden minimalen gewünschten Übertragungsfensterlänge zuzuweisen, ohne ein bereits geplantes minimales Übertragungsfenster für einen anderen Sender zu überlappen.

3. Masterknoten nach Anspruch 2, der ferner angepasst ist, das Trennen auf einen Sender anzuwenden, der auf Basis eines Prioritätsparameters, der in den Bandbreitenreservierungsanforderungsnachrichten umfasst ist, ausgewählt wird.

4. Masterknoten nach einem der vorhergehenden Ansprüche, der ferner angepasst ist, auf Basis eines QoS-Parameters, der in den Bandbreitenreservierungsanforderungsnachrichten oder in zu übertragenden Datenpaketen umfasst ist, Sender mit überlappenden Übertragungsfenstern zu priorisieren.

5. Masterknoten nach Anspruch 4, der ferner angepasst ist, ein Planen einer Übertragung für einen Sender mit der niedrigsten Priorität eines Satzes von Sendern mit überlappenden Übertragungsfenstern periodisch zu erzwingen.

6. Masterknoten nach einem der vorhergehenden Ansprüche, der ferner angepasst ist, als ein Gatewayknoten zum Übergeben von Daten zwischen mindestens einer drahtlosen LAN-Verbindung und der Bluetooth-LE-Verbindung zu fungieren, wobei der Gatewayknoten zu Folgendem ausgelegt ist:

   - Detektieren eines ersten Prioritätswerts, der in einem ersten Datenpaket umfasst ist, das auf der Bluetooth-LE-Verbindung empfangen wird;
   - Übersetzen des ersten Prioritätswerts gemäß einer ersten Übersetzungtabelle in einen zweiten Prioritätswert; und
   - Übertragen des ersten Datenpakets gemäß dem in demselben enthaltenen zweiten Prioritätswert auf der mindestens einen drahtlosen LAN-Verbindung.

7. Masterknoten nach Anspruch 6, wobei der erste Prioritätswert in dem Paket als ein spezieller Wert eines Zugangsadressfeldes, als ein spezieller Wert eines LLID-Feldes oder als ein spezieller Wert eines vorbestimmten Teils eines Nutzdatenfeldes umfasst ist.

8. Masterknoten nach einem der vorhergehenden Ansprüche, der ferner angepasst ist, als ein Gatewayknoten zum Übergeben von Daten zwischen der Bluetooth-LE-Verbindung und mindestens einer drahtlosen LAN-Verbindung zu fungieren, wobei der Gatewayknoten zu Folgendem ausgelegt ist:

   - Detektieren eines dritten Prioritätswerts, der in einem dritten Datenpaket umfasst ist, das auf der drahtlosen LAN-Verbindung empfangen wird;
   - Übersetzen des dritten Prioritätswerts gemäß einer zweiten Übersetzungtabelle in einen vierten Prioritätswert; und
   - Übertragen des zweiten Datenpakets gemäß dem in demselben enthaltenen vierten Prioritätswert auf der Bluetooth-LE-Verbindung.

9. Masterknoten nach Anspruch 8, wobei der vierte Prioritätswert im zweiten Datenpaket als ein spezieller Wert eines vorbestimmten Teils eines Nutzdatenfeldes beinhaltet ist.

**10.** Netzwerk, das einen Masterknoten nach einem der Ansprüche 6-9, mindestens einen Bluetooth-LE-Sender und mindestens einen drahtlosen LAN-Sendeempfänger umfasst, wobei der Masterknoten angeordnet ist, als ein Gatewayknoten zwischen dem mindestens einen Bluetooth-LE-Sender und dem mindestens einen LAN-Sendeempfänger zu fungieren.

**11.** Bluetooth-LE-Sender, der angepasst ist, eine Bandbreitenreservierungsanforderungsnachricht, die eine minimale gewünschte Übertragungsfensterlänge und eine maximale gewünschte Übertragungsfensterlänge beinhaltet, zu übertragen und ein Planungsübertragungsfenster gemäß der angeforderten minimalen gewünschten Übertragungsfensterlänge und der maximalen gewünschten Übertragungsfensterlänge zu empfangen.

**Revendications**

**1.** Nœud maître conçu pour :

- établir une liaison Bluetooth LE avec un dispositif ;
- recevoir, via ladite liaison Bluetooth LE, des messages de demande de réservation de bande passante incluant une longueur de fenêtre d'émission souhaitée minimale et une longueur de fenêtre d'émission souhaitée maximale ; et
- planifier des fenêtres d'émission pour des émetteurs respectifs, en particulier une fenêtre d'émission pour la liaison avec le dispositif, selon ladite longueur de fenêtre d'émission souhaitée minimale et ladite longueur de fenêtre d'émission souhaitée maximale notifiée dans lesdits messages de demande de réservation de bande passante respectifs, dans lequel la planification est conçue pour minimiser un chevauchement desdites fenêtres d'émission selon des valeurs attribuées.

**2.** Nœud maître selon la revendication 1, dans lequel ladite planification comprend l'omission d'un émetteur s'il n'est pas possible d'attribuer une fenêtre d'émission de la longueur de fenêtre d'émission souhaitée minimale correspondante sans chevaucher une fenêtre d'émission minimale déjà planifiée pour un émetteur différent.

**3.** Nœud maître selon la revendication 2, conçu en outre pour appliquer ladite omission à un émetteur sélectionné sur la base d'un paramètre de priorité compris dans les messages de demande de réservation de bande passante.

**4.** Nœud maître selon l'une quelconque des revendications précédentes, conçu en outre pour donner la priorité à des émetteurs ayant des fenêtres d'émission se chevauchant sur la base d'un paramètre QoS compris dans lesdits messages de demande de réservation de bande passante ou dans des paquets de données à émettre.

**5.** Nœud maître selon la revendication 4, conçu en outre pour périodiquement forcer une planification d'une émission pour un émetteur ayant la priorité la plus basse parmi un ensemble d'émetteurs ayant des fenêtres d'émission se chevauchant.

**6.** Nœud maître selon l'une quelconque des revendications précédentes, conçu en outre pour agir comme un nœud de passerelle pour rapprocher des données entre au moins une liaison LAN sans fil et ladite liaison Bluetooth LE, ledit nœud de passerelle étant configuré pour :

- détecter une première valeur de priorité comprise dans un premier paquet de données tel que reçu sur ladite liaison Bluetooth LE ;
- transformer ladite première valeur de priorité en une deuxième valeur de priorité selon une première table de transformation ; et
- émettre ledit premier paquet de données sur ladite au moins une liaison LAN sans fil selon ladite deuxième valeur de priorité et contenant celle-ci.

**7.** Nœud maître selon la revendication 6, dans lequel ladite première valeur de priorité est comprise dans ledit paquet comme une valeur spécifique d'un champ d'adresse d'accès, comme une valeur spécifique d'un champ LLID, ou comme une valeur spécifique d'une partie prédéterminée d'un champ de charge utile.

**8.** Nœud maître selon l'une quelconque des revendications précédentes, conçu en outre pour agir comme un nœud de passerelle pour rapprocher des données entre ladite liaison Bluetooth LE et au moins une liaison LAN sans fil, ledit nœud de passerelle étant configuré pour :

- détecter une troisième valeur de priorité comprise dans un second paquet de données tel que reçu sur ladite liaison LAN sans fil ;
- transformer ladite troisième valeur de priorité en une quatrième valeur de priorité selon une seconde table de transformation ; et
- émettre ledit second paquet de données sur ladite liaison Bluetooth LE selon ladite quatrième valeur de priorité et contenant celle-ci.

9. Nœud maître selon la revendication 8, dans lequel ladite quatrième valeur de priorité est incluse dans ledit second paquet de données comme une valeur spécifique d'une partie prédéterminée d'un champ de charge utile.

10. Réseau comprenant un nœud maître selon l'une quelconque des revendications 6 à 9, au moins un émetteur Bluetooth LE et au moins un émetteur-récepteur LAN sans fil, ledit nœud maître étant agencé pour agir comme un nœud de passerelle entre ledit au moins un émetteur Bluetooth LE et ledit au moins un émetteur-récepteur LAN sans fil.

11. Émetteur Bluetooth LE conçu pour émettre un message de demande de réservation de bande passante incluant une longueur de fenêtre d'émission souhaitée minimale et une longueur de fenêtre d'émission souhaitée maximale, et pour recevoir une fenêtre d'émission de planification selon ladite longueur de fenêtre d'émission souhaitée minimale demandée et ladite longueur de fenêtre d'émission souhaitée maximale.

Fig. 1

# Fig. 2

20%　　　　　40%　　　　　60%　　　　　80%　　　　　100%

supervisionTimeout

Fig. 3

Link Layer Packet

| Preamble (1 byte) | Access Address (4 bytes) | PDU (2 – 257 bytes) | CRC (3 bytes) |

Data channel PDU

Data channel PDU

| Header (2 bytes) | Payload (0 – 251 or 255 bytes) | MIC (4 bytes) |

ADV channel PDU with Access Address equal to **0x8E89BED6**

Data channel PDU Header

| LLID (2 bits) | NESN (1 bit) | SN (1 bit) | MD (1 bit) | RFU (3 bits) | Length (8 bits) |

LL Data PDU **01b** or **10b**

LL Control PDU **11b**

Data channel PDU Payload

| UP (1 byte) | Payload (1 – 250 or 254 bytes) |

AC_CO

AC_TC, AC_ST, AC_IN, AC_BE, AC_BK

EP 3 596 967 B1

14

## REFERENCES CITED IN THE DESCRIPTION

### Patent documents cited in the description

- US 20130034005 A1
- US 20050261007 A1

### Non-patent literature cited in the description

- Bluetooth SIG. *The Bluetooth Core Specification v5.0,* 06 December 2016, vol. 3
- *Configuration Parameter Options,* 1778-1798